(19) Europäisches Patentamt / European Patent Office / Office européen des brevets

(11) **EP 4 622 085 A1**

(12) **EUROPEAN PATENT APPLICATION**
published in accordance with Art. 153(4) EPC

(43) Date of publication:
**24.09.2025 Bulletin 2025/39**

(21) Application number: **24858620.8**

(22) Date of filing: **28.08.2024**

(51) International Patent Classification (IPC):
**H02M 7/219** (2006.01)

(52) Cooperative Patent Classification (CPC):
**H02J 7/06; H02M 1/00; H02M 7/219**

(86) International application number:
**PCT/CN2024/115129**

(87) International publication number:
**WO 2025/045086 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 CN 202311116746**

(71) Applicant: **Huawei Technologies Co., Ltd.
Shenzhen, Guangdong 518129 (CN)**

(72) Inventors:
• **WU, Liang**
**Shenzhen, Guangdong 518129 (CN)**
• **HE, Zuwei**
**Shenzhen, Guangdong 518129 (CN)**
• **REN, Jie**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **CONTROL MODULE AND ADAPTER**

(57) A control module and an adapter are provided. The control module is configured to determine an input current of a buck circuit and an output voltage of a loop compensation circuit; and control turn-off of a switching transistor of the buck circuit based on a relationship between the output voltage and the input current, where a turn-on duty cycle of the switching transistor is in direct proportion to a quotient of the output voltage and an average value of the input current. In this application, the turn-on duty cycle of the buck switching transistor is set to be in direct proportion to the quotient of the output voltage of the loop compensation circuit and the average input current, so that power factor modulation can be implemented, and an input voltage sampling resistor and a corresponding multiplier are omitted.

FIG. 6

**EP 4 622 085 A1**

# Description

This application claims priority to Chinese Patent Application No. 202311116746.4, filed with the China National Intellectual Property Administration on August 30, 2023 and entitled "CONTROL MODULE AND ADAPTER", which is incorporated herein by reference in its entirety.

## TECHNICAL FIELD

This application relates to the field of electronic technologies, and more specifically, to a control module and an adapter.

## BACKGROUND

With development of super charging technologies, a power for charging a terminal device is increasingly high, and reaches a hectowatt level. Due to a standard limitation on harmonic injection in a power grid, a power factor correction (Power Factor Correction, PFC) circuit needs to be added for a power supply greater than 75 W, to reduce harmonics injected by a device into the power grid. To reduce a peak current to reduce a conduction loss, a high-power PFC circuit usually works in a continuous conduction mode (Continuous Conduction Mode, CCM). To reduce a switch loss, a medium/low-power PFC usually works in a critical conduction mode (Critical Conduction Mode, CRM).

A conventional control method for a buck PFC in a constant-frequency CCM is an average current control method. After being sampled by using voltage divider resistors R1 and R2, an input bus voltage is multiplied by an output voltage of a voltage feedback loop, to obtain a current instruction Iref. After a current feedback loop performs an operation on the current instruction and an input current sampling voltage, a modulated wave is obtained. Compared with a constant-frequency sawtooth wave, the modulated wave generates a control signal for a switching transistor. It can be learned that in a control system, a high-voltage resistor network is needed to sample the bus voltage, and a multiplier needs to be added to multiply an instantaneous input voltage by an output of a feedback circuit, to obtain a target average current value.

However, in the current control manner, a plurality of high-voltage resistors need to be added outside the control system to sample the bus voltage to implement a tracking function, and the multiplier needs to be added inside the control system to process the signal. Consequently, a system layout area is large, and standby power consumption is high.

## SUMMARY

This application provides a control module and an adapter, to omit an input voltage sampling resistor and a corresponding multiplier, thereby reducing a system layout area and standby power consumption.

According to a first aspect, this application provides a control module, which may be used in a device power supply such as a terminal device adapter, a base station power supply, or a server power supply. The control module is configured to determine an input current of a buck circuit and an output voltage of a loop compensation circuit; and the control module is further configured to control turn-off of a switching transistor of the buck circuit based on a relationship between the output voltage and the input current, where a turn-on duty cycle of the switching transistor is in direct proportion to a quotient of the output voltage and an average value of the input current.

For example, a relationship between an output voltage and an output current may be understood as a relationship between the output voltage and a voltage of a capacitor after the capacitor is charged by using the output current or a current proportional to the output current.

This application provides a control mode for a PFC running in a constant-frequency CCM. In this mode, the turn-on duty cycle of the switching transistor is set to be in direct proportion to the quotient of the output voltage of the loop compensation circuit and the average input current, so that power factor modulation can be implemented, and an input voltage sampling resistor and a corresponding multiplier are omitted.

In a possible implementation, the input current tracks an input voltage of the buck circuit.

In a possible implementation, the average value of the input current is an average value of the input current over all switching periods.

In a possible implementation, the control module includes a current source and a capacitor; the current source is configured to output a current proportional to the average value of the input current; the capacitor is configured to: when the switching transistor is turned on, perform charging based on the current output by the current source; and the control module is specifically configured to: when a voltage of the capacitor reaches the output voltage, control turn-off of the switching transistor.

In the foregoing manner, the capacitor is charged by using the current proportional to the average input current, the voltage (for example, the voltage is a sawtooth wave) of the capacitor is compared with the output voltage of the feedback circuit, and when the voltage of the capacitor is greater than the output voltage of the feedback circuit, the PFC switching transistor is turned off, so that a ratio calculation function can be implemented without a divider.

In a possible implementation, the control module is configured to: control the switching transistor to be turned on when an inductor current of an inductor of the buck circuit crosses zero; or control, based on a constant-frequency pulse, the switching transistor to be turned on after preset fixed duration.

In a possible implementation, the buck circuit further includes an auxiliary winding connected to the inductor; and the control module is configured to determine a zero-crossing point of the current of the inductor by detecting a voltage of the auxiliary winding.

In a possible implementation, the control module is configured to perform an OR operation on the constant-frequency pulse and a zero-crossing signal of the inductor current of the inductor of the buck circuit, and control turn-on of the switching transistor based on an operation result.

In the foregoing manner, a turn-on signal of the PFC switching transistor is obtained by performing an OR operation on the constant-frequency pulse and a zero-crossing signal of the PFC auxiliary winding, so that switching between a CRM mode and a CCM mode can be smoothly implemented.

In a possible implementation, the input current is a current of a sampling resistor of the buck circuit.

According to a second aspect, this application provides an adapter, including:

> a power factor correction PFC circuit, where the PFC circuit includes a rectifier bridge and a buck circuit; and

> the control module according to any implementation of the first aspect.

In a possible implementation, the PFC circuit further includes an auxiliary winding connected to the inductor.

According to a third aspect, a control method is provided. The method includes: determining an input current of a buck circuit and an output voltage of a loop compensation circuit; and controlling turn-off of a switching transistor of the buck circuit based on a relationship between the output voltage and the input current, where a turn-on duty cycle of the switching transistor is in direct proportion to a quotient of the output voltage and an average value of the input current.

In a possible implementation, the input current tracks an input voltage of the buck circuit.

In a possible implementation, the average value of the input current is an average value of the input current over all switching periods.

In a possible implementation, the controlling turn-off of a switching transistor of the buck circuit based on a relationship between the output voltage and the input current includes: outputting, through a current source, a current proportional to the average value of the input current; when the switching transistor is turned on, charging a capacitor based on the current output by the current source; and when a voltage of the capacitor reaches the output voltage, controlling turn-off of the switching transistor.

In a possible implementation, the method further includes: controlling the switching transistor to be turned on when an inductor current of an inductor of the buck circuit crosses zero; or controlling, based on a constant-frequency pulse, the switching transistor to be turned on after preset fixed duration.

In a possible implementation, the buck circuit further includes an auxiliary winding connected to the inductor; and the method further includes: determining a zero-crossing point of the current of the inductor by detecting a current of the auxiliary winding.

In a possible implementation, the method further includes: performing an OR operation on the constant-frequency pulse and a zero-crossing signal of the inductor current of the inductor of the buck circuit, and controlling turn-on of the switching transistor based on an operation result.

In a possible implementation, the input current is a current of a sampling resistor of the buck circuit.

## BRIEF DESCRIPTION OF DRAWINGS

> FIG. 1A is a schematic of a PFC circuit;
> FIG. 1B is a schematic of a PFC circuit;
> FIG. 2 is a diagram of a waveform in a case that a PFC circuit works with overload of a high-voltage input;
> FIG. 3 is a diagram of a waveform in a case that a PFC circuit works with overload of a low-voltage input;
> FIG. 4 is a schematic of a PFC circuit;
> FIG. 5 is a schematic flowchart of a control method according to an embodiment of this application;
> FIG. 6 is a schematic of a PFC circuit according to an embodiment of this application;
> FIG. 7 is a schematic of a PFC circuit according to an embodiment of this application; and
> FIG. 8 is a diagram of a waveform in a case that a low input voltage is overloaded.

## DESCRIPTION OF EMBODIMENTS

The following describes embodiments of the present invention with reference to accompanying drawings in embodiments of the present invention. Terms used in embodiments of the present invention are merely used to explain specific embodiments of the present invention, but are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

The terms "substantially (substantially)", "about (about)", and the like are used herein as approximation terms rather than as degree terms, and are intended to take into account inherent deviations of measured values or calculated values that are known to a person of ordinary skill in the art. In addition, when embodiments of the present invention are described, "may (may)" is used to mean "one or more possible embodiments". The terms "use (use)", "using (using)", and "used (used)" used herein may be considered to be synonymous with the terms "utilize (utilize)", "utilizing (utilizing)", and "utilized (utilized)", respectively. In addition, the term "example (exemplary)" is intended to refer to an example or an illustration.

The following describes some concepts in this application.

(1) Adapter (Adapter): is an apparatus that has a voltage conversion function and supplies power to an electronic device (also referred to as a terminal device), and is also referred to as a charging plug (Charger), a switch power supply (Switch Power Supply) adapter, a charger (Charger), or a power converter (Power Converter).

(2) Super charging adapter (Super Charger): is a charger or an adapter that can implement charging, and is an adapter that can implement fast charging for a device, such as a mobile phone or a computer, with a battery to shorten charging time. The super charging adapter is also usually referred to as a super charger (Super Charger), a fast charger, or the like.

(3) Half bridge: refers to an electrical topology structure in which two power switching transistors work alternately in a switch power supply to implement power transmission. A primary switch bridge is also referred to as a primary transistor or a first switch, and a secondary switch bridge is also referred to as a secondary transistor or a second switch.

(4) Asymmetric half bridge: means that duty cycles for turning on an upper bridge and a lower bridge are not 50% symmetrical in the present invention.

(5) Controller IC: refers to a control unit of a product, and implements waveform detection and action logic.

(6) Transformer: is a component that is responsible for power transmission and voltage transform in a switch power supply.

(7) Auxiliary winding: is a winding that is not responsible for power transmission in a transformer, such as a VCC winding.

(8) Primary-side winding: is a winding that is placed on a primary side in a transformer and that is responsible for inputting a voltage and a current.

(9) Secondary-side winding: is a winding that is placed on a secondary side in a transformer and that is responsible for outputting a voltage and a current.

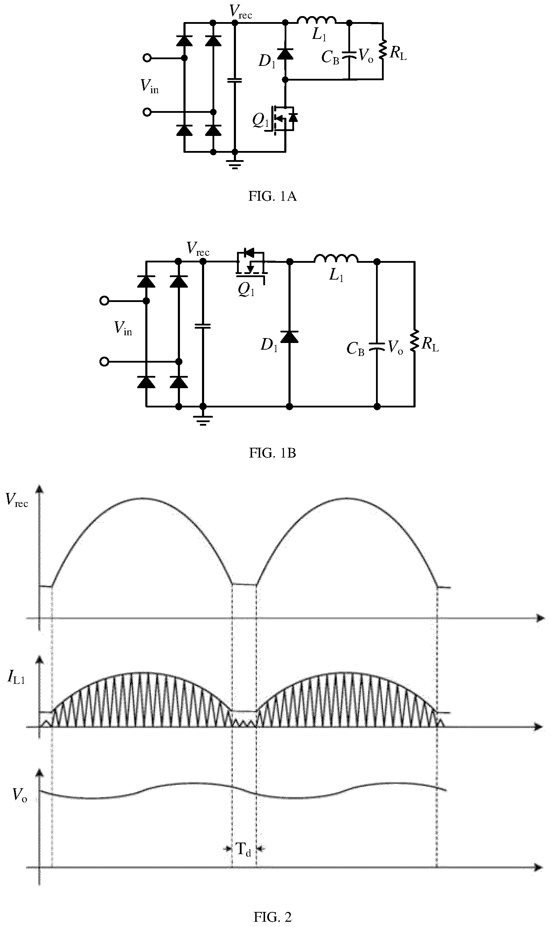

FIG. 1A is a schematic of a bridged buck power factor correction (Buck Power Factor Correction, Buck PFC) circuit.

As shown in FIG. 1A, the bridged buck PFC circuit includes an uncontrolled rectifying circuit and a buck circuit. After passing through the uncontrolled rectifying circuit, an input alternating current voltage Vin is rectified into a direct current voltage Vrec, and the buck circuit decreases the fluctuating direct current voltage Vrec to a stable output voltage Vo.

A waveform in a case that the bridged buck PFC circuit works with overload of a high-voltage input is shown in FIG. 2. When an inductor current I L1 crosses zero, a switching transistor Q1 is turned on, an inductor performs excitation, and the inductor current I L1 rises. After the inductor current I L1 reaches a peak current, the switching transistor Q1 is turned off, freewheeling is performed on the inductor current through a diode D1, the inductor performs deexcitation, and the inductor current I L1 decreases until the inductor current decreases to 0 again. This working mode is referred to as a CRM mode.

In addition, refer to FIG. 1B. FIG. 1B is a schematic of a co-grounded buck circuit. It should be understood that a specific structure of the buck circuit is not limited in embodiments of this application.

It should be understood that, in the CRM mode, the switching transistor is turned on only after the inductor current crosses zero, so that the switching transistor is turned on with zero voltage, thereby reducing a switch loss.

It should be noted that, when the input voltage Vin is lower than the output voltage Vo, the buck circuit cannot transfer energy from an input to an output, and a load is supplied with energy by an output capacitor CB in FIG. 1A. This time period is shown by Td in FIG. 2.

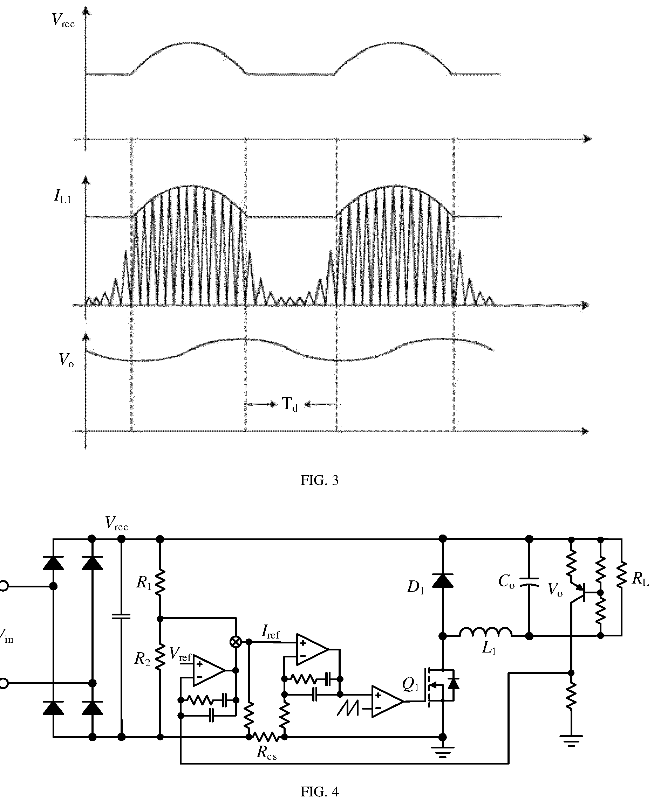

FIG. 3 is a diagram of a waveform in a case that a bridged buck PFC circuit works with overload of a low-voltage input.

It should be understood that, when the input voltage Vin in the circuit decreases and the load remains unchanged, if an output power needs to be kept unchanged, an input current inevitably increases. In addition, the time Td in which a power cannot be transferred from the input to the output is correspondingly prolonged.

This further increases a peak input current. However, the increase in the peak current causes a sharp increase in a conduction loss of a switch component, a loss of the inductor, and a loss of a rectifier diode, thereby causing a sharp decrease in system efficiency. That is, when the PFC circuit works in the CRM mode, the peak input current increases sharply with a decrease in the input voltage, and correspondingly, the system efficiency also decreases sharply.

FIG. 4 is an internal signal block diagram of a PFC in a CCM mode.

A conventional control method for a buck PFC in a constant-frequency CCM is an average current control method. FIG. 4 shows a procedure of an internal signal block diagram of the buck PFC. After being sampled by using voltage divider resistors R1 and R2, an input bus voltage is multiplied by an output voltage of a voltage feedback loop, to obtain a current instruction Iref. After a current feedback loop performs an operation on the current instruction and an input current sampling voltage, a modulated wave is obtained. Compared with a constant-frequency sawtooth wave, the modulated wave generates a control signal for a switching transistor. It can be learned that in a control system, a high-voltage resistor network is needed to sample the bus voltage, and a multiplier needs to be added to multiply an instantaneous input voltage by an output of a feedback circuit, to obtain a target average current value.

However, in the current control manner, a plurality of high-voltage resistors need to be added outside the control system to sample the bus voltage to implement a tracking function, and the multiplier needs to be added inside the control system to process the signal. Consequently, a system layout area is large, and standby power consumption is high.

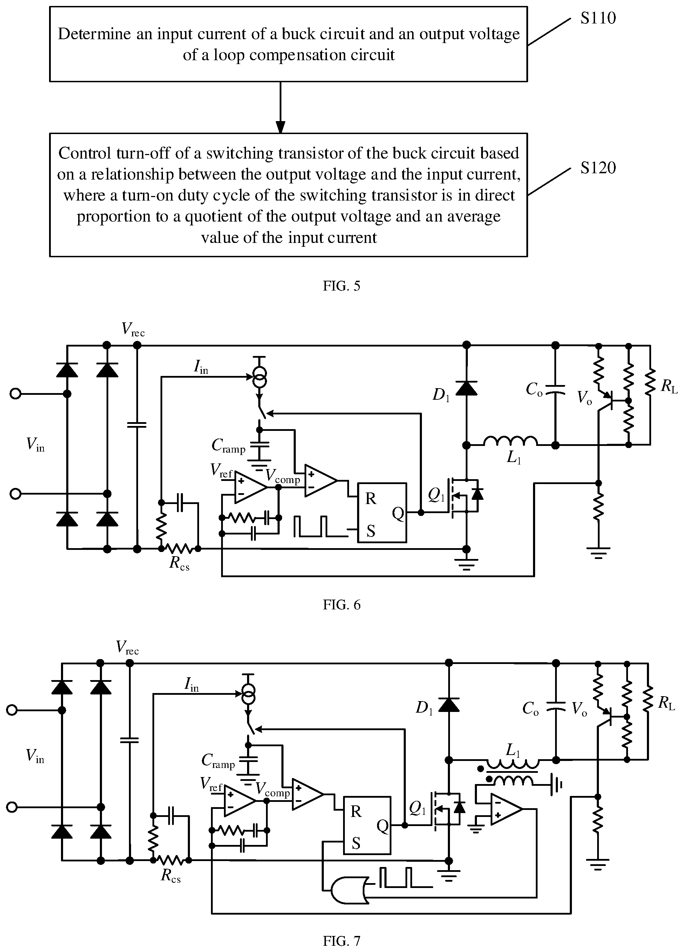

FIG. 5 is a diagram of a control method 100 according to an embodiment of this application. The method includes the following steps.

S110: Determine an input current of a buck circuit and an output voltage of a loop compensation circuit.

In a possible implementation, as shown in FIG. 6, the buck circuit may be connected after a full-bridge circuit, and the input current of the buck circuit can represent an input current of a PFC circuit.

In a possible implementation, the input current of the buck circuit is a current proportional to the input current of the PFC circuit. In other words, the input current can represent the input current of the PFC circuit. For example, the input current of the PFC circuit may be directly used as the input current, or a current that is not the input current of the PFC circuit but can represent the input current of the PFC circuit may be used as the input current.

In a possible implementation, turn-off of a switching transistor of the PFC circuit is controlled based on a relationship between the output voltage and the first current, where a turn-on duty cycle of the switching transistor is in direct proportion to a quotient of the output voltage and an average current of the input current. The input current is a current of a sampling resistor of the buck circuit.

For example, refer to FIG. 6. FIG. 6 is a schematic of a PFC circuit. After a voltage of a sampling resistor Rcs is filtered, an input current Iin can be obtained.

In a possible implementation, the output voltage of the loop compensation circuit, that is, an output voltage of a voltage regulation control loop (that is, an internal loop), may be determined.

For example, refer to FIG. 6. The loop compensation output voltage is Vcomp.

S120: Control turn-off of a switching transistor of the buck circuit based on a relationship between the output voltage and the input current, where a turn-on duty cycle of the switching transistor is in direct proportion to a quotient of the output voltage and an average value of the input current.

The average value of the input current may be an average value of the input current over all switching periods.

In a possible implementation, the control module may include a current source and a capacitor; a current proportional to the average value of the input current may be output through the current source; when the switching transistor is turned on, the capacitor may be charged based on the current output by the current source; and when a voltage of the capacitor reaches the output voltage, turn-off of the switching transistor may be controlled.

When the switching transistor is turned on, the current source charges the capacitor Cramp, where a current value of the current source is K*Iin, and K is a coefficient. When a voltage across two ends of the capacitor Cramp reaches the loop compensation output voltage Vcomp, the switching transistor is turned off. When a next constant-frequency clock signal is received, the switching transistor is turned on again. In this case, a converter works in a constant-frequency CCM mode.

In the foregoing manner, the capacitor is charged by using the current proportional to the average input current, the voltage (for example, the voltage is a sawtooth wave) of the capacitor is compared with the output voltage of the feedback circuit, and when the voltage of the capacitor is greater than the output voltage of the feedback circuit, the PFC switching transistor is turned off, so that a ratio calculation function can be implemented without a divider.

According to turn-off logic of the switching transistor, the following formula may be obtained, where Ton is turn-on time of the switching transistor:

$$\frac{K I_{in} T_{on}}{C_{ramp}} = V_{comp}.$$

A volt-second balance formula of an inductor of a buck converter is as follows, where Tsw is turn-on time of the switching transistor:

$$V_{in}T_{on} = V_{out}T_{sw}.$$

According to the foregoing two formulas, it can be learned that:

$$I_{in} = \frac{V_{comp}C_{ramp}}{V_{out}T_{sw}K}V_{in}.$$

In steady-state working, Vcomp, Vout, and Tsw are all constant values, and the capacitance value Cramp and the proportional coefficient K are also set in advance. It can be learned that if Vcomp*Cramp/Vout/Tsw/K is a constant value, Iin and Vin may change proportionally, so that the input current tracks an input voltage, that is, a power factor correction function is implemented.

This application provides a control mode for a PFC running in a constant-frequency CCM. In this mode, the turn-on duty cycle of the PFC switching transistor is set to be in direct proportion to the quotient of the output voltage of the voltage feedback circuit and the average input current, so that power factor modulation can be implemented, and an input voltage sampling resistor and a corresponding multiplier are omitted.

As shown in FIG. 7, FIG. 7 is a schematic of a PFC that supports a CRM mode. In this embodiment, a condition for turning off the switching transistor may be consistent with that in the CCM mode described in the foregoing embodiment, and a condition for turning on the switching transistor is added with zero-crossing of an auxiliary winding.

Specifically, in a possible implementation, when the PFC circuit works in the CRM, the switching transistor is controlled to be turned on when an inductor current of an inductor of the PFC circuit crosses zero; or when the PFC circuit works in the critical conduction mode CCM, the switching transistor is controlled, based on a constant-frequency pulse, to be turned on after preset fixed duration.

In a possible implementation, the buck circuit further includes an auxiliary winding connected to the inductor; and a zero-crossing point of the current of the inductor may be determined by detecting a voltage of the auxiliary winding.

In a possible implementation, an OR operation may be performed on the constant-frequency pulse and a zero-crossing signal of the inductor current of the inductor of the buck circuit, and turn-on of the switching transistor may be controlled based on an operation result.

A turn-on signal of the PFC switching transistor is obtained by performing an OR operation on the constant-frequency pulse and a zero-crossing signal of the PFC auxiliary winding, so that switching between the CRM mode and the CCM mode can be smoothly implemented.

After the switching transistor is turned off, the voltage of the auxiliary winding decreases from a positive voltage to a negative voltage. After a comparator performs zero-crossing comparison, the turn-on signal of the switching transistor is generated. When a constant-frequency clock signal is at a low level, deexcitation of the inductor is completed, the auxiliary winding crosses zero, and the switching transistor is turned on. In this case, the switching transistor is turned on at a valley, a switch loss is reduced, and the switching transistor works in the CRM mode. Before the inductor current decreases to 0, the constant-frequency clock signal occurs at a high level, and the switching transistor is turned on through hard switching, and works in the CCM mode. It can be learned that a control policy provided in embodiments of this application may work in the CCM or CRM mode, and has a wide application scope.

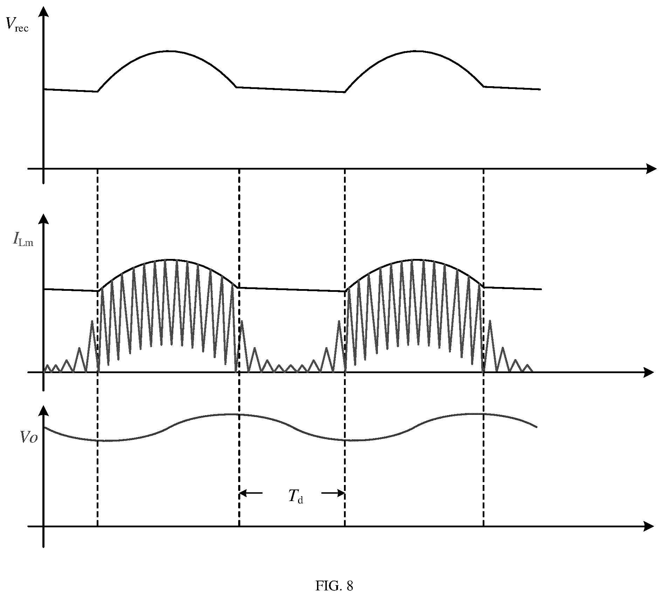

FIG. 8 shows a waveform in a case that a low input voltage is overloaded in this embodiment. When a peak current is relatively small, the switching transistor Q1 is turned on after the peak current decreases to 0, to implement ZVS turn-on, so as to reduce a switch loss, and work in the CRM mode. When a peak current is relatively large, the switching transistor Q1 is turned on before the peak current decreases to 0, to reduce the peak current, so as to reduce a conduction loss, and work in the CCM mode.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A control module, wherein

the control module is configured to determine an input current of a buck circuit and an output voltage of a loop compensation circuit; and
the control module is further configured to control turn-off of a switching transistor of the buck circuit based on a relationship between the output voltage and the input current, wherein a turn-on duty cycle of the switching transistor is in direct proportion to a quotient of the output voltage and an average value of the input current.

2. The control module according to claim 1, wherein the average value of the input current is an average value of the input current over all switching periods.

3. The control module according to claim 1 or 2, wherein the control module comprises a current source and a capacitor;

the current source is configured to output a current proportional to the average value of the input current;
the capacitor is configured to: when the switching transistor is turned on, perform charging based on the current output by the current source; and
the control module is specifically configured to: when a voltage of the capacitor reaches the output voltage, control turn-off of the switching transistor.

4. The control module according to any one of claims 1 to 3, wherein

the control module is configured to: control the switching transistor to be turned on when an inductor current of an inductor of the buck circuit crosses zero; or
control, based on a constant-frequency pulse, the switching transistor to be turned on after preset fixed duration.

5. The control module according to claim 4, wherein the buck circuit further comprises an auxiliary winding connected to the inductor; and the control module is configured to determine a zero-crossing point of the current of the inductor by detecting a voltage of the auxiliary winding.

6. The control module according to any one of claims 1 to 5, wherein
the control module is configured to perform an OR operation on the constant-frequency pulse and a zero-crossing signal of the inductor current of the inductor of the buck circuit, and control turn-on of the switching transistor based on an operation result.

7. The control module according to any one of claims 1 to 6, wherein the input current is a current of a sampling resistor of the buck circuit.

8. An adapter, comprising:

a power factor correction PFC circuit, wherein the PFC circuit comprises a rectifier bridge and a buck circuit; and
the control module according to any one of claims 1 to 7.

9. The adapter according to claim 8, wherein the buck circuit further comprises an auxiliary winding connected to the inductor.

10. A control method, wherein the method comprises:

determining an input current of a buck circuit and an output voltage of a loop compensation circuit; and
controlling turn-off of a switching transistor of the buck circuit based on a relationship between the output voltage and the input current, wherein a turn-on duty cycle of the switching transistor is in direct proportion to a quotient of the output voltage and an average value of the input current.

11. The method according to claim 10, wherein the average value of the input current is an average value of the input current over all switching periods.

12. The method according to claim 10 or 11, wherein the controlling turn-off of a switching transistor of the buck circuit based on a relationship between the output voltage and the input current comprises:

outputting, through a current source, a current proportional to the average value of the input current;
when the switching transistor is turned on, charging a capacitor based on the current output by the current source; and
when a voltage of the capacitor reaches the output voltage, controlling turn-off of the switching transistor.

FIG. 1A

FIG. 1B

FIG. 2

FIG. 3

FIG. 4

Determine an input current of a buck circuit and an output voltage of a loop compensation circuit — S110

Control turn-off of a switching transistor of the buck circuit based on a relationship between the output voltage and the input current, where a turn-on duty cycle of the switching transistor is in direct proportion to a quotient of the output voltage and an average value of the input current — S120

FIG. 5

FIG. 6

FIG. 7

FIG. 8

## INTERNATIONAL SEARCH REPORT

| International application No. |
|---|
| **PCT/CN2024/115129** |

**A. CLASSIFICATION OF SUBJECT MATTER**

H02M7/219(2006.01)i

According to International Patent Classification (IPC) or to both national classification and IPC

**B. FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 环路, 补偿, 电压, 电流, 占空, 平均, 输入电流, 补偿电压, loop, voltage, current, duty, input, average, compensate

**C. DOCUMENTS CONSIDERED TO BE RELEVANT**

| Category* | Citation of document, with indication, where appropriate, of the relevant passages | Relevant to claim No. |
|---|---|---|
| A | CN 103001463 A (HANGZHOU SILAN MICROELECTRONICS CO., LTD.) 27 March 2013 (2013-03-27) description, paragraphs 38-80, and figures 1-4 | 1-12 |
| A | CN 109088536 A (CHINA RESOURCES POWTECH (SHANGHAI) CO., LTD.) 25 December 2018 (2018-12-25) entire document | 1-12 |
| A | WO 2019153308 A1 (SHINRY TECHNOLOGIES CO., LTD.) 15 August 2019 (2019-08-15) entire document | 1-12 |
| A | CN 116545218 A (SOUTH CHINA UNIVERSITY OF TECHNOLOGY) 04 August 2023 (2023-08-04) entire document | 1-12 |
| A | CN 112542946 A (SOUTHWEST JIAOTONG UNIVERSITY) 23 March 2021 (2021-03-23) entire document | 1-12 |
| A | CN 110545037 A (NANJING UNIVERSITY OF AERONAUTICS AND ASTRONAUTICS) 06 December 2019 (2019-12-06) entire document | 1-12 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 November 2024** | **21 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/115129**

| Patent document cited in search report | | | Publication date (day/month/year) | Patent family member(s) | | | Publication date (day/month/year) |
|---|---|---|---|---|---|---|---|
| CN | 103001463 | A | 27 March 2013 | None | | | |
| CN | 109088536 | A | 25 December 2018 | None | | | |
| WO | 2019153308 | A1 | 15 August 2019 | CN | 109075697 | A | 21 December 2018 |
| CN | 116545218 | A | 04 August 2023 | None | | | |
| CN | 112542946 | A | 23 March 2021 | None | | | |
| CN | 110545037 | A | 06 December 2019 | None | | | |

Form PCT/ISA/210 (patent family annex) (July 2022)

**EP 4 622 085 A1**

REFERENCES CITED IN THE DESCRIPTION

**Patent documents cited in the description**

- CN 202311116746